# EUROPEAN PATENT SPECIFICATION

(11) **EP 4 586 370 B1**
(45) Date of publication and mention of the grant of the patent: **25.11.2026**
(21) Application number: 24840070.7
(22) Date of filing: 09.07.2024
(51) Int. Cl.: H01M 10/6566, H01M 10/613, H01M 10/6551, H01M 50/204

(54) **COOLING DEVICE AND BATTERY PACK COMPRISING SAME**
KÜHLVORRICHTUNG UND BATTERIEPACK DAMIT
DISPOSITIF DE REFROIDISSEMENT ET BLOC-BATTERIE LE COMPRENANT

(30) Priority: 10.07.2023 KR 20230088787
(43) Date of publication of application: 16.07.2025
(73) Proprietor: LG Energy Solution, Ltd., Seoul 07335 (KR)
(72) Inventor: LEE, Sang Yoon, Daejeon 34122 (KR); SHIN, Ju Hwan, Daejeon 34122 (KR)
(74) Representative: Plasseraud IP
(86) International application number: PCT/KR2024/009798
(87) International publication number: WO 2025/014260

(56) References cited:
- WO-A1-2024/117847
- CN-B- 108 028 446
- JP-A- 2015 103 324
- JP-A- 2023 045 748
- KR-A- 20200 130 677
- KR-A- 20230 046 465
- US-A1- 2006 017 202
- US-A1- 2023 006 281

## Description

### [Technical Field]

The present invention relates to a cooling device having improved process efficiency by applying a connector with a changed structure and improved cooling performance, and to a battery pack including the same.

### [Background Technology of the Invention]

Unlike primary batteries, secondary batteries can be charged and discharged a plurality of times. Secondary batteries are widely used as an energy source for various wireless devices such as handsets, laptops, and cordless vacuum cleaners. Secondary batteries are also attracting attention as an energy source for electric vehicles and hybrid electric vehicles, which are being proposed as a way to solve air pollution from conventional gasoline and diesel vehicles that use fossil fuels. Therefore, the types of applications using secondary batteries are diversifying due to the advantages of secondary batteries, and it is expected that secondary batteries will be applied to many more fields and products in the future.

A battery module includes a plurality of battery cells connected in series or parallel to each other to form a battery cell stack to increase capacity and power output. Furthermore, a battery pack can be configured by connecting these battery modules in series/parallel and including a cooling device to properly manage their temperature.

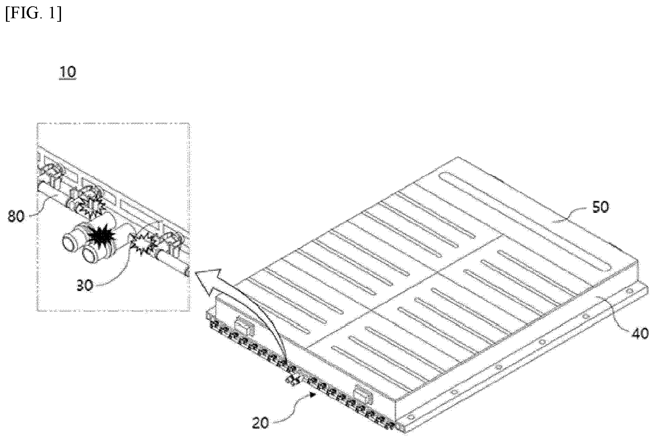

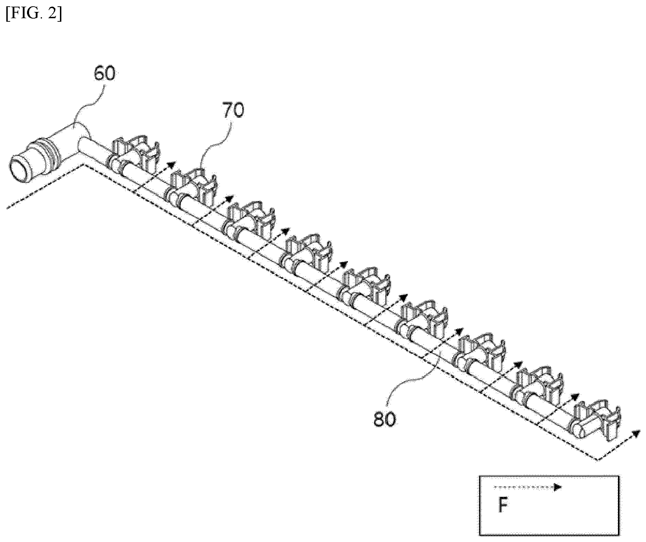

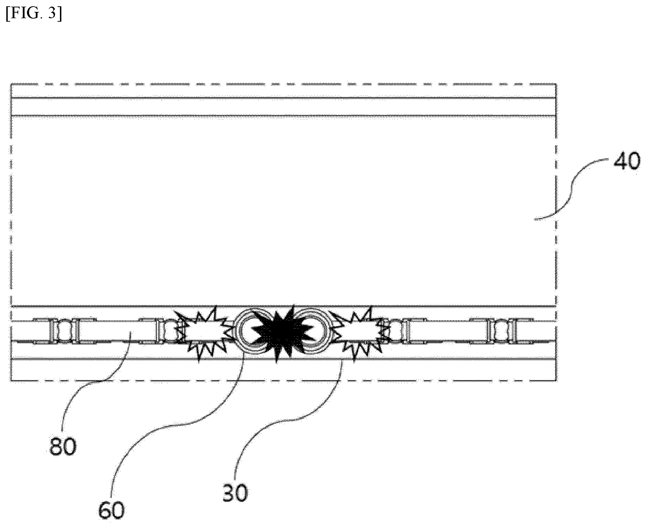

FIG. 1 illustrates a conventional battery pack 10 with a cooling device, FIG. 2 illustrates a pipe assembly 20 in the cooling device, and FIG. 3 is a front view of a portion of the battery pack 10 of FIG. 1.

The battery pack 10 includes a heat sink 30 (not shown) supporting a lower part of a battery module (not shown), a side wall 40 coupled to the heat sink 30 to support a side part of a battery module seated on the heat sink 30, and an upper case 50 coupled to the side wall 40 to cover an upper part of the battery module to protect it from external impact or the like.

Inside the heat sink 30 is provided a cooling channel through which cooling fluid can flow, and cooling fluid can be injected into the cooling channel inside the heat sink 30 via the pipe assembly 20 of FIG. 2.

The conventional pipe assembly 20 includes a main port 60 through which external cooling fluid is first introduced, as shown in FIG. 2, and a plurality of ports connected to the main port 60 via a pipe 80. Here, each of the pipes is then connected to a respective cooling channel of the heat sink 30, directing the cooling fluid traveling through the pipe 80 into the respective cooling channel.

However, in applying a gripper shape to the gripper ports in order to fix each of the ports to the cooling channels of the heat sink 30, there was often structural interference between the gripper shape of the main port 60 and the ports located adjacent to the main port 60, as shown in FIGS. 1 and 3. That is, there has been a difficulty in assembling the pipe assembly 20 by the gripper structures of the ports adjacent to the main port 60.

FIG. 4 shows a proposed shape of the battery pack 10 to solve the above interference problem, wherein the main port 60 is repositioned to eliminate interference with the gripper shape of the neighboring other ports.

FIG. 5 illustrates a piping assembly 20 included in the battery pack 10 of FIG. 4, and FIG. 6 is a front view of a portion of the battery pack 10 of FIG. 4.

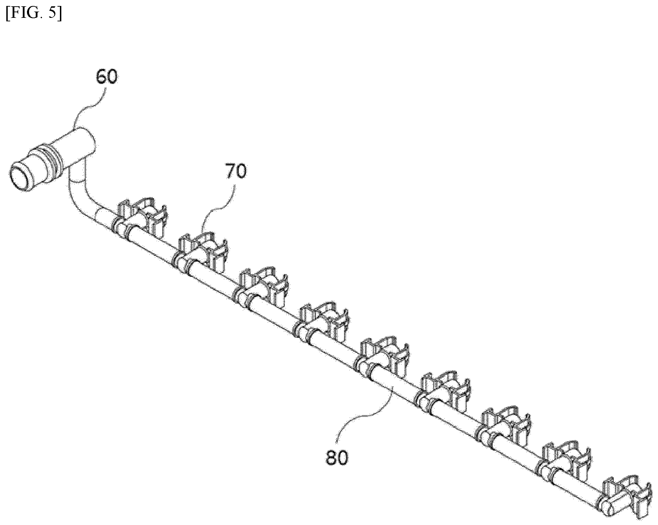

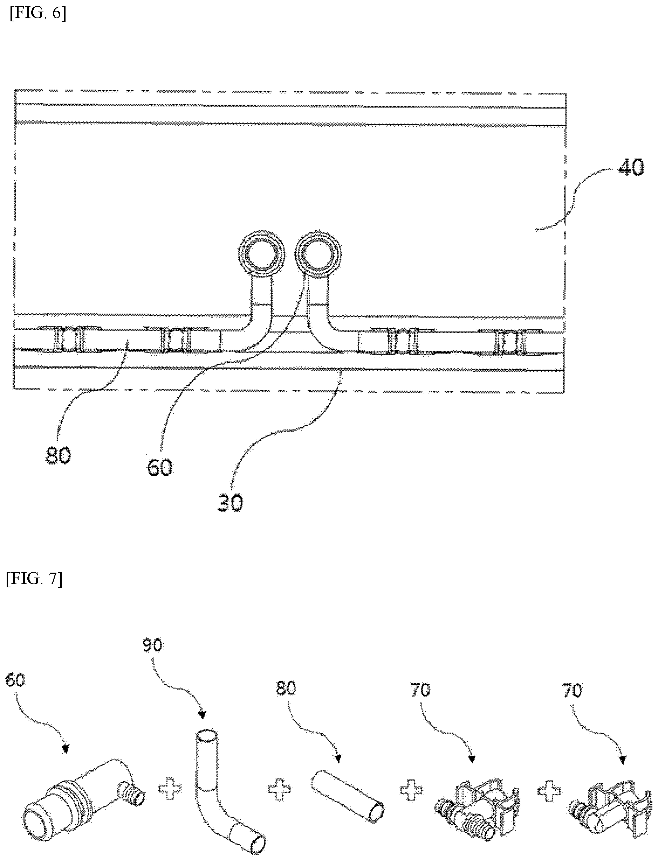

Referring to FIGS. 5 and 6, it can be seen that by designing the height of the main port 60 to be higher than the other ports, the interference problem is solved.

However, the pipe assembly 20 of this configuration has the disadvantage that it requires more parts than conventionally used to connect the main port 60 with the other ports. That is, FIG. 7 illustrates representative parts comprising the pipe assembly 80 of FIG. 6. Referring to FIGS. 5 through 7, it can be seen that additional unconventional deformable pipes 90 have been added to connect the repositioned main port 60 to the other ports.

[Patent Document] Korean Registered Patent No. 10-2449082. WO 2024 117847, US 2023 006281 and CN 108022446 relate to temperature management of a battery.

### [Description of the Invention]

### [Technical Problem]

Accordingly, the present invention aims to solve the above-mentioned problems, and to provide a cooling device with minimal interference between each structure.

It is also an object of the present invention to provide a cooling device and a battery pack including the same without compromising cooling performance.

### [Technical Solution]

The invention is defined in the set of claims where subject matter of claim 1 is a cooling device for cooling a cell stack assembly inside a battery pack using cooling fluid supplied from a coolant storing part, comprising : a heat sink comprising a plurality of cooling channels; and a pipe assembly coupled to the heat sink to allow fluid to enter and exit the cooling channel, wherein the pipe assembly comprises: a plurality of connectors coupled to each of the cooling channels, and formed as a hollow type to allow cooling fluid to pass therein; and a plurality of connecting pipes perpendicularly connecting each of the connectors, wherein the plurality of connectors comprises : a main port connected to a coolant storing part; and a plurality of sub-ports connected via the main port and the plurality of connecting pipes, wherein the main port comprises: a first pipe communicating the coolant storing part and the plurality of connecting pipes; and a second pipe branching from the first pipe and connecting with a cooling channel, wherein
the first pipe comprises: a main pipe part with any one end of the first pipe is closed; and a sub-pipe part connected to a side part of the main pipe part, wherein
the sub-pipe part is connected perpendicularly to the main pipe part, wherein the main port further comprises an engaging part protruding from the second pipe in a snap-fit structure such that the second pipe is coupled to the heat sink.

The second pipe may be connected to a sub-pipe part of the first pipe.

The engaging part may be formed in symmetrical pairs on the second pipe.

The heat sink may include a pipe-shaped coupling port that is coupled to each cooling channel inlet, the coupling port includes a protruding part over which an engaging part of the second pipe is engaged, and the second pipe may be fastened to the coupling port by the engagement of the engaging part and protruding part.

The second pipe may be separated from the coupling port as the engaging part is lifted from the protruding part.

The connector may include a plastic material and may be manufactured as a single piece by injection molding.

The sub-port may comprise: a pipe-shaped moving pipe; and an injecting pipe branching from the moving pipe and connecting with the cooling channel, wherein both ends of the moving pipe may be coupled with a connecting pipe, respectively.

The sub-port may further include an engaging part protruding from the injecting part in a snap-fit structure such that the injecting part is coupled to the heat sink.

The present invention also provides a battery pack comprising a cooling device according to claim 1 and accommodating a plurality of cell stack assemblies, the battery pack comprising: a plurality of cell stack assemblies seated on an upper part of the heat sink of the cooling device; the pipe assembly being coupled to at least one of a front end and a rear end of the heat sink; and a side wall coupled along a perimeter of the heat sink to support side part of the cell stack assembly.

### [Advantageous Effects]

According to the present invention, the efficiency of the process for manufacturing a cooling device and a battery pack including the same can be improved.

Furthermore, according to the present invention, the safety of a battery pack including the same can be improved by applying a cooling device without compromising cooling performance.

### [Brief Description of the Drawings]

FIG. 1 illustrates a conventional battery pack with a cooling device.
FIG. 2 illustrates a pipe assembly included in the cooling device of FIG. 1.
FIG. 3 is a front view of a portion of the battery pack of FIG. 1.

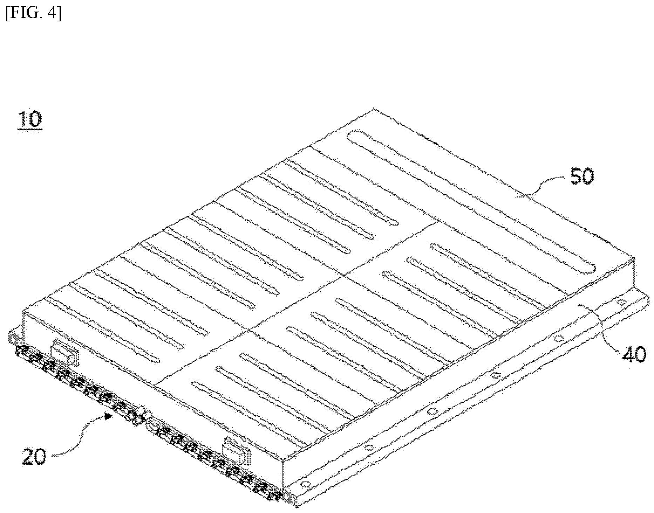

FIG. 4 illustrates a conventional battery pack with a modified form of cooling device.
FIG. 5 illustrates a pipe assembly included in the cooling device of FIG. 4.
FIG. 6 is a front view of a portion of the battery pack of FIG. 4.
FIG. 7 is an isolated view of the pipe assembly configuration of FIG. 5.

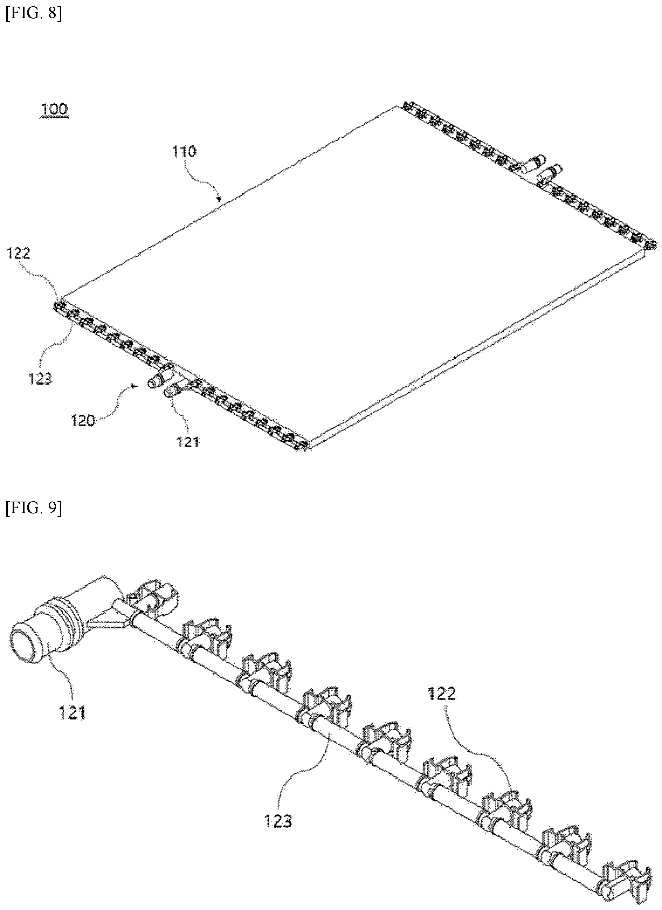

FIG. 8 is a perspective view of a cooling device according to a first embodiment of the present invention.
FIG. 9 illustrates a portion of the pipe assembly.

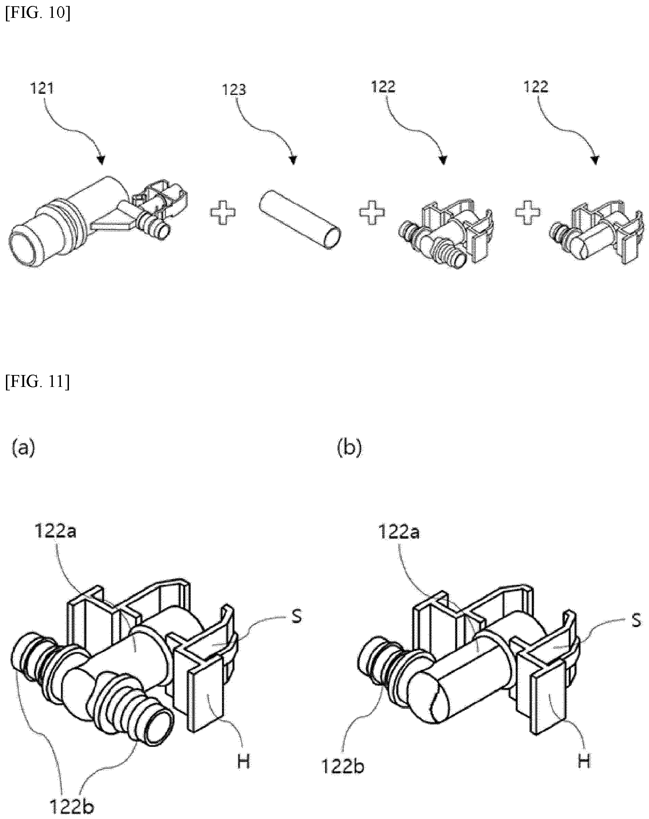

FIG. 10 is an isolated view of the parts comprising the pipe assembly of FIG. 9.
FIG. 11 illustrates a sub-port included in a cooling device of the present invention.

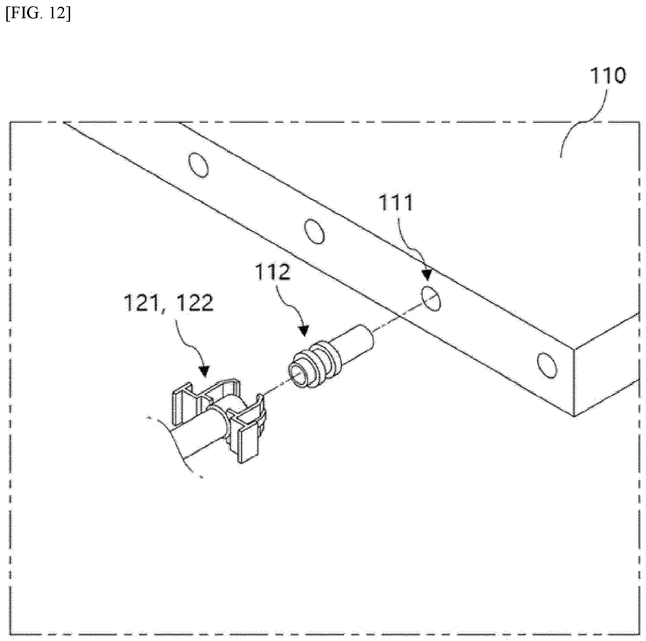

FIG. 12 illustrates the arrangement of a portion of the main port and sub-port, coupling port and heat sink.

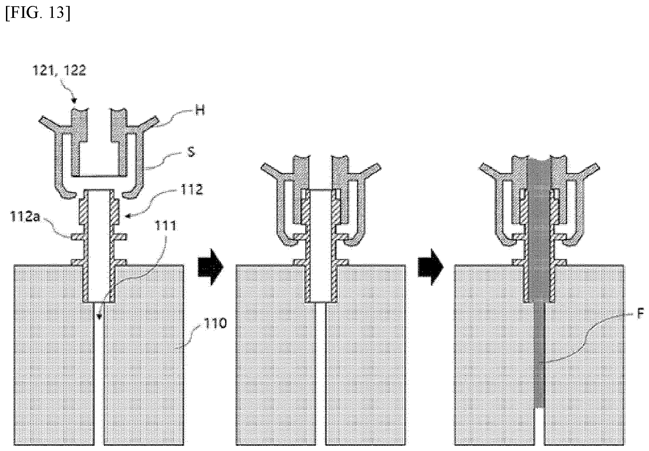

FIG. 13 is a cross-sectional view of the process of coupling a sub-port and main port to a coupling port coupled to a heat sink.

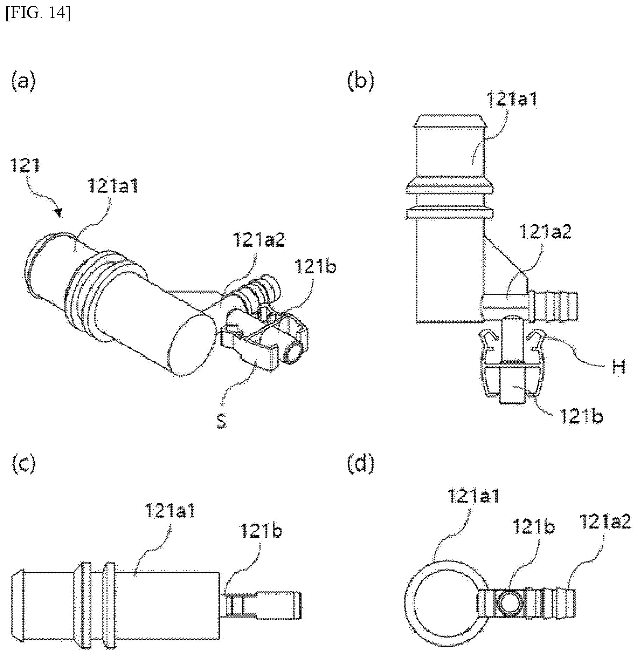

FIG. 14 is a perspective, top, side, and front view of a main port of the present invention.

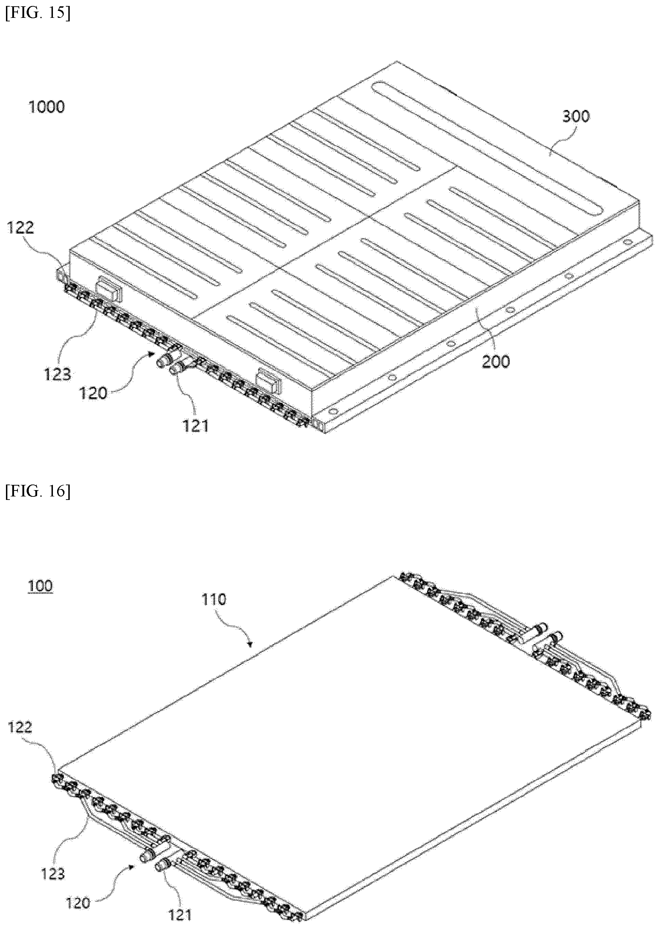

FIG. 15 is a perspective view of a battery pack applied with a cooling device according to a first embodiment of the present invention.
FIG. 16 is a perspective view of a cooling device not according to the present invention.

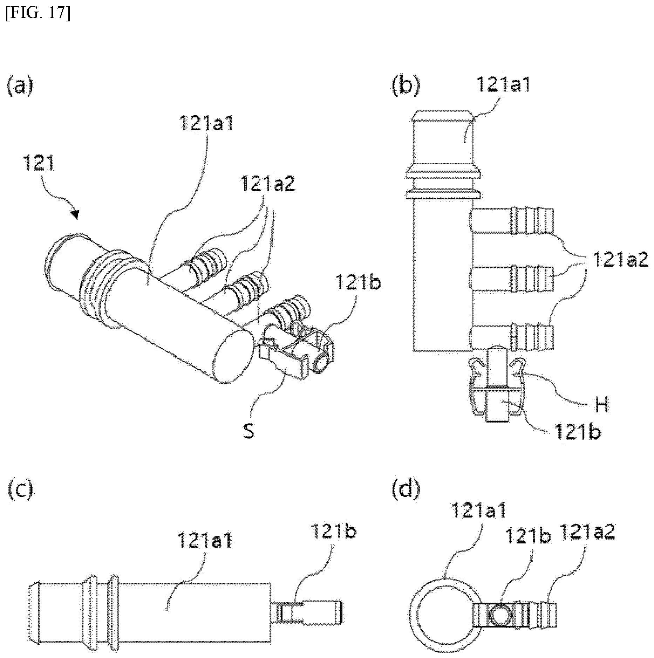

FIG. 17 is a perspective, top, side, and front view of a main port included in a cooling device not according to the present invention.

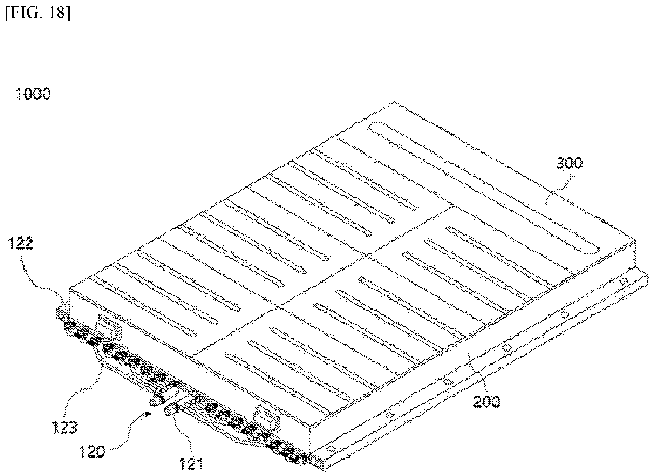

FIG. 18 is a perspective view of a battery pack applied with a cooling device not according to the present invention.

### [Best Mode for Carrying out the Invention]

Hereinafter, preferred embodiments of the present invention will be described in detail with reference to the accompanying drawings.

The present invention relates to a cooling device having improved process efficiency by applying a connector with a changed structure and having improved cooling performance, and to a battery pack including the same.

FIGS. 8 through 15 relate to a cooling device and a battery pack including the same according to a first embodiment of the present invention, and FIGS. 16 through 18 relate to a cooling device and a battery pack including the same according to a second embodiment not according to the present invention.

Hereinafter, the cooling device and battery pack of the present invention will be described with reference to the following drawings.

### (First embodiment)

### Cooling Device 100

The present invention relates to a cooling device 100 for cooling cells inside a battery pack using a cooling fluid F supplied from a coolant storing part (not shown).

The coolant storing part serves to store fluid and to supply the stored fluid to the outside as needed. In this case, the fluid may be cooled within the coolant storing part, or it may be cooled by a separate device or the like after it leaves the coolant storing part.

FIG. 8 is a perspective view of a cooling device 100 according to a first embodiment of the present invention.

The cooling device 100 includes a heat sink 110 and a pipe assembly 120, as shown in FIG. 8.

The heat sink 110 has a flat plate shape and includes a plurality of cooling channels 111 therein.

The cooling channel 111 is a passageway through which the cooling fluid F flows, and may be designed in at least one of a straight and a curved shape.

The cooling channel 111 is preferably designed to pass over as much area as possible in the heat sink 110.

The pipe assembly 120 is coupled to the heat sink 110 to allow fluid to enter and exit the cooling channels 111 of the heat sink 110.

The pipe assembly 120 may be coupled to either the front and rear ends of the heat sink 110, or may be coupled to both the front and rear ends of the heat sink 110, respectively, as shown in FIG. 8. This is free to vary depending on the design of the cooling channels 111 within the heat sink 110.

The cooling fluid F supplied from the coolant storing part travels to the heat sink 110 through a pipe assembly 120 provided at one end of the heat sink 110. After passing through the heat sink 110, the cooling fluid F may travel to another pipe assembly 120 provided at the other end of the heat sink 110, or may return to the pipe assembly 120 provided at one end of the heat sink 110.

As shown above, the migration path of the cooling fluid F can be freely varied according to the designer's objectives.

FIG. 9 is an illustration of a portion of the pipe assembly 120, and FIG. 10 is an isolated view of the parts comprising the pipe assembly 120 of FIG. 9.

The pipe assembly 120 includes connectors and connecting pipes 123.

The connector is hollowly formed to allow fluid to pass therein, and is coupled to each cooling channel 111 of the heat sink 110.

The connector includes a main port 121 and a sub-port 122, as shown in FIGS. 9 and 10.

The main port 121 is a configuration of the pipe assembly 120 through which the cooling fluid F supplied from the coolant storing part first passes.

The main port 121 may be directly connected to the coolant storing part, or may be connected to the coolant storing part via a separate pipe (not shown).

The sub-port 122 introduces cooling fluid F moved from the main port 121 into each cooling channel 111 of the heat sink 110, or alternatively, moves it to another sub-port 122.

The sub-port 122 comprises a connecting part 122b coupled to a connecting pipe 123 and an injecting part 122a coupled to the connecting part 122b and coupled to the heat sink 110.

FIG. 11 illustrates a sub-port 122 included in the cooling device 100 of the present invention.

The sub-port 122 is configured into two kinds as shown in FIG. 11, depending on the number of connecting pipes 123 connected to it.

FIG. 11(a) shows a connecting part 122b being formed on either side of the injecting part 122a, such that cooling fluid F can pass through the connecting part 122b to another sub-port 122, and can also flow through the injecting part 122a in communication with the connecting part 122b into the cooling channel 111 of the heat sink 110 coupled to that sub-port 122.

In FIG. 11(b), a connecting part 122b is formed at one side of the injecting part 122a, and the cooling fluid F introduced through the connecting part 122b flows directly into the cooling channel 111 through the injecting part 122a.

The sub-port 122 may be selected from any of FIGS. 11(a) and 11(b), depending on where it is provided.

A sub-port 122 in the form of FIG. 11(b) may be utilized when provided in the outermost position in the direction opposite to the main port 121 as shown in FIG. 9.

The sub-port 122 includes an engaging part S of snap-fit structure on the outer circumferential surface of the injecting part 122a.

The engaging part S is provided in pairs symmetrically with respect to the injecting part 122a.

The sub-port 122 may be fixed to the heat sink 110 by manipulation of the engaging part S.

The sub-port 122 preferably includes a plastic material so that the engaging part S is free to move. That is, the sub-port 122 comprising a plastic material may be manufactured integrally by injection molding or the like.

The cooling device 100 of the present invention also includes a protruding shape in which the sub-port 122 and the part that is coupled to the sub-port 122 can be engaged and fastened to the engaging part S. Thus, the sub-port 122 utilizes the elasticity of the plastic to allow the engaging part S to engage on the protruding shape even with a slight pushing force, without the need for special bolting.

In order to disengage the sub-port 122 from the coupled part, it is necessary to lift the front end of the engaging part S so that the engaging part S does not get caught in the protruding shape. Therefore, the sub-port 122 may further include a manipulating part H protruding on the outer side of the engaging part S to manually manipulate the movement of the engaging part S, and a handling action of pressing the manipulating part H may simply disengage the sub-port 122 from the coupled part.

The sub-port 122 may be coupled directly to the heat sink 110, or may be coupled to the heat sink 110 utilizing a coupling port 112.

FIG. 12 illustrates the arrangement of a portion of the main port 121 and sub-port 122, and a portion of the coupling port 112 and the heat sink 110.

At the inlet of the cooling channel 111, a pipe-shaped coupling port 112 may first be coupled and fixed, as shown in FIG. 12, and subsequently the sub-port 122 may be coupled at an end of the fixed coupling port 112. In this case, the coupling port 112 may include a thread on the outer circumferential surface of one end, and a thread corresponding to the thread of the coupling port 112 may be formed on the inner circumferential surface of the inlet of the cooling channel 111 of the heat sink 110 into which the coupling port 112 is inserted. In other words, the coupling port 112 may be screwed and fixed to a female thread formed on the heat sink 110.

FIG. 13 is a cross-sectional view of a sub-port 122 and main port 121 being coupled to a coupling port 112 coupled to heat sink 110.

According to FIGS. 12 and 13, the coupling port 112 may include a protruding part 112a on its outer peripheral surface such that the engaging part S can be engaged. Thus, the sub-port 122, moved towards the coupling port 112, is fixed to the coupling port 112 and the heat sink 110 at the moment when the engaging part S is engaged on the protruding part 112a. Subsequently, the cooling fluid F supplied from the sub-port 122 may be injected into the cooling channel 111 through the coupling port 112.

The connecting pipe 123 is interposed between the connectors as shown in FIGS. 8 through 10.

*The connecting pipe 123 is designed to be pipe-shaped and connects between each connector so that the cooling fluid F can reach all connectors.

The cooling device 100 of the present invention is characterized by a modification of the conventional main port 121 geometry. In particular, the cooling device 100 of the present invention is characterized by a modification of the shape of the main port 121 so that it is directly coupled to the heat sink 110 while at the same time being connected to other sub-ports 122. In other words, the main port 121 includes three inlets for the cooling fluid F to enter and exit, and is coupled to the heat sink 110 so that any one of the inlets is in communication with the cooling channel 111.

Thus, the cooling fluid F passing through the main port 121 may flow directly into the cooling channel 111 of the heat sink 110 connected to the main port 121, or may flow to the sub-port 122.

FIG. 14 shows a perspective view (FIG. 14 (a)), a top view (FIG. 14 (b)), a side view (FIG. 14 (c)), and a front view (FIG. 14 (d)) of the main port 121 of the present invention.

The main port 121 includes a first pipe of a structure connecting the coolant storing part and the connecting pipe 123, and a second pipe 121b branching from the first pipe and connecting with the cooling channel 111.

The first pipe more specifically includes a main pipe part 121a1 and a sub-pipe part 121a2.

The main pipe part 121a1 is hollow and has a closed shape at one of its ends.

The sub-pipe part 121a2 is formed to be connected to a side part of the main pipe part 121a1.

The sub-pipe part 121a2 serves to change the direction of movement of the cooling fluid F introduced through either of the open ends of the main pipe part 121a1. That is, the cooling fluid F traveling along the longitudinal direction of the main pipe part 121a1, when it reaches the closed end of the main pipe part 121a1, flows into the sub-pipe part 121a2 connected to the side part of the main pipe part 121a1 and turns the direction of movement in the longitudinal direction of the sub-pipe part 121a2.

The sub-pipe part 121a2 is preferably connected so as to be perpendicular to the main pipe part 121al. Thus, the cooling fluid F traveling through the first pipe switches its direction of movement as it moved from the main pipe part 121a1 to the sub-pipe part 121a2, with the direction of movement being close to vertical.

Preferably, the main port 121 is configured such that both the first pipe and the second pipe 121b are at right angles to the direction of gravity.

The main port 121 includes a second pipe 121b connected to a side part of the sub-pipe part 121a2 for communication with the sub-pipe part 121a2.

The second pipe 121b serves to allow the cooling fluid F flowing in from the main pipe part 121a1 to flow out in a direction other than the sub-pipe part 121a2. That is, the cooling fluid F flowing in through one channel of the main pipe part 121a1 can flow out through two channels, the sub-pipe part 121a2 and the second pipe 121b.

The second pipe 121b is preferably formed to be perpendicular to the sub-pipe part 121a2.

The second pipe 121b has a similar structure and the same material as some of the sub-ports 122, in part because it plays the same role as the other sub-port 122 connected to the cooling channel 111 of the heat sink 110.

That is, the main port 121 further includes an engaging part of a snap-fit structure on the second pipe 121b such that the second pipe 121b is coupled to the heat sink 110.

The heat sink 110 further includes a pipe-shaped coupling port 112 at the inlet of a cooling channel 111 to which a second pipe 121b of the main port 121 is coupled.

The coupling port 112 includes a protruding part 112a such that the engaging part S of the second pipe 121b is engaged.

The engaging part S is formed in a symmetrical pair on the second pipe 121b, the pair of engaging parts S engaged on the protruding part 112a of the coupling port 112 coupled to the inlet of the cooling channel 111 to fasten the main port 121 to the heat sink 110.

The second pipe 121b of the main port 121 can be separated from the coupling port 112, as can the sub-port 122, as the engaging part S is lifted from the protruding part 112a.

The main port 121 includes a manipulating part H protruding from one side of the engaging part S for manipulating the operation of the engaging part S, as shown in FIG. 14. Thus, by pressing the manipulating part H, the engaging part S can be operated.

The main port 121 included in the cooling device 100 of the present invention can be stably fixed to the heat sink 110 through a second pipe 121b configuration that is directly coupled to the heat sink 110 as described above. In addition, the second pipe 121b configuration as described above solves problems such as interference with other sub-port 122.

### Battery pack

The battery pack of the present invention, which accommodates a plurality of cell stack assemblies, is characterized by the application of the cooling device 100 of the present invention.

FIG. 15 is a perspective view of a battery pack with a cooling device 100 according to a first embodiment of the present invention.

The battery pack includes a heat sink 110 on which a plurality of cell stack assemblies are seated on its upper part, a pipe assembly 120 coupled to at least one of a front end and a rear end of the heat sink 110, and a side wall coupled along a perimeter of the heat sink 110 to support side parts of the cell stack assemblies.

The battery pack may further include an upper case coupled to the upper end of the side wall to cover and protect the upper part of the cell stack assembly, as shown in FIG. 15.

The plurality of cell stack assemblies accommodated in the battery pack may be cooled in real time due to cooling fluid F being injected into the heat sink 110 and traveling by the cooling device 100.

### (Another embodiment, not according to the present invention)

### Cooling Device 100

The cooling device 100 according to the second embodiment not according to the present invention is characterized in that the main port 121 includes a plurality of sub-pipe parts 121a2.

FIG. 16 is a perspective view of a cooling device 100 according to the second embodiment not according to the present invention.

The cooling device 100 includes a heat sink 110 and a pipe assembly 120, as shown in FIG. 16.

FIG. 17 shows a perspective view (FIG. 17 (a)), a top view (FIG. 17 (b)), a side view (FIG. 17 (c)), and a front view (FIG. 17 (d)) of a main port 121 included in a cooling device 100 according to the second embodiment not according to the present invention.

The main port 121 includes a first pipe of a structure connecting the coolant storing part and the connecting pipe 123, and a second pipe 121b branching from the first pipe and connecting with the cooling channel 111.

The first pipe more specifically includes a main pipe part 121a1 and a plurality of sub-pipe parts 121a2.

The main pipe part 121a1 is hollow and has a closed shape at one of its ends.

The sub-pipe part 121a2 is formed to be connected to side parts of the main pipe part 121a1. More specifically, each of the sub-pipe part 121a2 is connected by being spaced apart at a predetermined distance along the longitudinal direction of the main pipe part 121a1, as shown in FIG. 17.

The sub-pipe part121a2 serves to change the direction of movement of the cooling fluid F introduced through either of the open ends of the main pipe part 121a1. That is, the cooling fluid F traveling along the longitudinal direction of the main pipe part 121a1, when it reaches the closed end of the main pipe part 121a1, flows into each of the sub-pipe part 121a2 connected to the side parts of the main pipe part 121a1 and turns the direction of movement to the longitudinal direction of each of the sub-pipe part 121a2.

Since each sub-pipe part 121a2 preferably extends in the same direction, the direction of movement of the cooling fluid F through each sub-pipe part 121a2 is also the same.

Each of the sub-pipe parts 121a2 is preferably connected so as to be perpendicular to the main pipe part 121a1. Thus, the cooling fluid F traveling through the first pipe switches its direction of movement to be close to vertical as it moves from the main pipe part 121a1 to the sub-pipe part 121a2.

Preferably, the main port 121 is configured such that both the first pipe and the second pipe 121b are at right angles to the direction of gravity.

A second pipe 121b of the main port 121 included in the cooling device 100 according to a second embodiment is connected to a sub-pipe part 121a2 among the plurality of sub-pipe parts 121a2 provided at a position closest to the end of the main port 121.

The second pipe 121b serves to allow the cooling fluid F flowing in from the main pipe part 121a1 to flow out in a direction other than the sub-pipe part 121a2. That is, the cooling fluid F flowing in through one channel of the main pipe part 121a1 can flow out through a plurality of channels, the sub-pipe part 121a2 and the second pipe 121b.

The second pipe 121b is preferably formed to be perpendicular to the sub-pipe part 121a2.

The second pipe 121b has a similar structure and the same material as some of the sub ports 122, in part because it plays the same role as the other sub-port 122 connected to the cooling channel 111 of the heat sink 110.

That is, the main port 121 further includes an engaging part of a snap-fit structure on the second pipe 121b such that the second pipe 121b is coupled to the heat sink 110.

The heat sink 110 further includes a pipe-shaped coupling port 112 at the inlet of a cooling channel 111 to which a second pipe 121b of the main port 121 is coupled.

The coupling port 112 includes a protruding part 112a protruding such that the engaging part S of the second pipe 121b is engaged.

The engaging part S is formed in a symmetrical pair on the second pipe 121b, the pair of engaging parts S engaged on the protruding part 112a of the coupling port 112 coupled to the inlet of the cooling channel 111 to fasten the main port 121 to the heat sink 110.

The second pipe 121b of the main port 121 can be separated from the coupling port 112 as the engaging part S is lifted from the protruding part 112a, as can the sub-port 122.

The main port 121 includes a manipulating part H protruding from one side of the engaging part S for manipulating the operation of the engaging part S. Thus, by pressing the manipulating part H, the engaging part S can be operated.

The sub-port 122 included in the cooling device 100 according to the second embodiment differs from the first embodiment in that the sub-ports 122 are not all connected by the connecting pipe 123. That is, the plurality of sub-ports 122 is separated in several pairs, as shown in FIG. 16. Here, the sub-ports 122 connected to each other by the connecting pipe 123 are connected to form a group, and any one sub-port 122 belonging to the group is directly connected to the main port 121 via the connecting pipe 123. Thus, the cooling device 100 according to the second embodiment is capable of delivering the cooling fluid F to a larger heat sink 110 area at a higher speed than the cooling device 100 according to the first embodiment.

### Battery pack

The battery pack of the present invention, which accommodates a plurality of cell stack assemblies, is characterized by the application of the cooling device 100 of the present invention.

FIG. 18 is a perspective view of a battery pack with a cooling device 100 according to the second embodiment not according to the present invention.

The battery pack includes a heat sink 110 on which a plurality of cell stack assemblies is seated on its upper part, a pipe assembly 120 coupled to at least one of a front end and a rear end of the heat sink 110, and a side wall coupled along a perimeter of the heat sink 110 to support the side parts of the cell stack assemblies.

The battery pack may further include an upper case coupled to the upper end of the side walls to cover and protect the upper part of the cell stack assembly, as shown in FIG. 18.

The plurality of cell stack assemblies accommodated in the battery pack may be cooled in real time due to cooling fluid F being injected into the heat sink 110 and traveling by the cooling device 100.

### [Reference numerals]

10: (Prior Art) BATTERY PACK
20: (PRIOR ART) PIPE ASSEMBLY
30: (PRIOR ART) HEAT SINK
40: (PRIOR ART) SIDE WALL
50: (PRIOR ART) UPPER CASE
60: (PRIOR ART) MAIN PORT
70: (PRIOR ART) PORT
80: (PRIOR ART) PIPE
90: (PRIOR ART) DEFORMABLE PIPE
1000: BATTERY PACK
100: COOLING DEVICE
110: HEAT SINK
111: COOLING CHANNEL
112: COUPLING PORT
112a: PROTRUDING PART
120: PIPE ASSEMBLY
121: MAIN PORT
121a1: MAIN PIPE PART
121a2: SUB-PIPE PART
121b: SECOND PIPE
122: SUB-PORT
122a: INJECTING PART
122b: CONNECTING PART
123: CONNECTING PIPE
S: ENGAGING PART
H: MANIPULATING PART
F: COOLING FLUID (MOVE)

## Claims

1. A cooling device (100) for cooling a cell stack assembly inside a battery pack (1000) using cooling fluid (F) supplied from a coolant storing part, comprising:
a heat sink (110) comprising a plurality of cooling channels (111); and
a pipe assembly (120) coupled to the heat sink (110) to allow fluid to enter and exit the cooling channel (111), wherein
the pipe assembly (120) comprises:
a plurality of connectors (121, 122) coupled to each of the cooling channels (111), and formed as a hollow type to allow cooling fluid (F) to pass therein; and
a plurality of connecting pipes (123) perpendicularly connecting each of the connectors (121, 122),
wherein the plurality of connectors (121, 122) comprises:
a main port (121) connected to a coolant storing part; and
a plurality of sub-ports (122) connected via the main port (121) and the plurality of connecting pipes (123),
wherein the main port (121) comprises:
a first pipe (121a1, 121a2) communicating the coolant storing part and the plurality of connecting pipes (123); and
a second pipe (121b) branching from the first pipe (121a1, 121a2) and connecting with a cooling channel (111),
wherein the first pipe (121a1, 121a2) comprises:
a main pipe part (121a1) with any one end of the first pipe is closed; and
a sub-pipe part (121a2) connected to a side part of the main pipe part (121a1),
wherein the sub-pipe part (121a2) is connected perpendicularly to the main pipe part (121a1),
wherein the main port (121) further comprises an engaging part (S) protruding from the second pipe (121b) in a snap-fit structure such that the second pipe (121b) is coupled to the heat sink (110).

2. The cooling device (100) of claim 1, wherein
the second pipe (121b) is connected to a sub-pipe part (121a2) of the first pipe (121a1, 121a2).

3. The cooling device (100) of claim 1, wherein
the engaging part (S) is formed in symmetrical pairs on the second pipe (121b).

4. The cooling device of claim 1, wherein
the heat sink (110) comprises a pipe-shaped coupling port (112) that is coupled to each cooling channel (111) inlet,
the coupling port (112) comprises a protruding part (112a) over which an engaging part (S) of the second pipe (121b) is engaged, and
the second pipe (121b) is fastened to the coupling port (112) by the engagement of the engaging part (S) and protruding part (112a).

5. The cooling device of claim 4, wherein
the second pipe (121b) is separated from the coupling port (112) as the engaging part (S) is lifted from the protruding part (112a).

6. The cooling device (100) of claim 1, wherein
the connector (121, 122) comprises a plastic material and manufactured as a single piece.

7. The cooling device (100) of claim 1, wherein
the sub-port (122) comprises:
a pipe-shaped injecting part (122a); and
a pipe-shaped connecting part (122b) coupled to a side part of the injecting part (122a).

8. The cooling device (100) of claim 7, wherein
the sub-port (122) further comprises an engaging part (S) protruding from the injecting part (122a) in a snap-fit structure such that the injecting part (122a) is coupled to the heat sink (110).

9. A battery pack (1000) comprising a cooling device (100) according to claim 1 and accommodating a plurality of cell stack assemblies, the battery pack comprising:
a plurality of cell stack assemblies seated on an upper part of the heat sink (110) of the cooling device (100);
the pipe assembly (120) being coupled to at least one of a front end and a rear end of the heat sink (110); and
a side wall coupled along a perimeter of the heat sink (110) to support side part of the cell stack assembly.

## Patentansprüche

1. Kühlvorrichtung (100) zum Kühlen einer Zellenstapelanordnung im Inneren eines Batteriepacks (1000) unter Verwendung von Kühlflüssigkeit (F), die von einem Kühlmittelspeicherteil zugeführt wird, umfassend:
einen Kühlkörper (110), der eine Vielzahl von Kühlkanälen (111) umfasst; und
eine Rohranordnung (120), die mit dem Kühlkörper (110) gekoppelt ist, um den Eintritt und Austritt von Flüssigkeit in den und aus dem Kühlkanal (111) zu ermöglichen, wobei die Rohranordnung (120) umfasst:
• eine Vielzahl von Verbindern (121, 122), die mit jedem der Kühlkanäle (111) gekoppelt und hohl ausgebildet sind, um den Durchgang von Kühlflüssigkeit (F) darin zu ermöglichen; und
• eine Vielzahl von Verbindungsrohren (123), die jeden der Verbinder (121, 122) senkrecht verbinden,
wobei die Vielzahl von Verbindern (121, 122) umfasst:
• einen Hauptanschluss (121), der mit einem Kühlmittelspeicherteil verbunden ist; und
• eine Vielzahl von Unteranschlüssen (122), die über den Hauptanschluss (121) und die Vielzahl von Verbindungsrohren (123) verbunden sind,
wobei der Hauptanschluss (121) umfasst:
• ein erstes Rohr (121a1, 121a2), welches das Kühlmittelspeicherteil und die Vielzahl von Verbindungsrohren (123) miteinander verbindet; und
• ein zweites Rohr (121b), das von dem ersten Rohr (121a1, 121a2) abzweigt und mit einem Kühlkanal (111) verbunden ist,
wobei das erste Rohr (121a1, 121a2) umfasst:
• ein Hauptrohrteil (121a1), bei dem ein beliebiges Ende des ersten Rohrs geschlossen ist; und
• ein Unterrohrteil (121a2), das mit einem Seitenteil des Hauptrohrteils (121a1) verbunden ist,
wobei das Unterrohrteil (121a2) senkrecht mit dem Hauptrohrteil (121a1) verbunden ist, wobei der Hauptanschluss (121) ferner ein Eingriffsteil (S) umfasst, das von dem zweiten Rohr (121b) in einer Schnappverbindungsstruktur vorsteht, so dass das zweite Rohr (121b) mit dem Kühlkörper (110) gekoppelt ist.

2. Kühlvorrichtung (100) nach Anspruch 1, wobei das zweite Rohr (121b) mit einem Unterrohrteil (121a2) des ersten Rohrs (121a1, 121a2) verbunden ist.

3. Kühlvorrichtung (100) nach Anspruch 1, wobei das Eingriffsteil (S) in symmetrischen Paaren an dem zweiten Rohr (121b) ausgebildet ist.

4. Kühlvorrichtung nach Anspruch 1, wobei
der Kühlkörper (110) einen rohrförmigen Kopplungsanschluss (112) umfasst, der mit jedem Einlass des Kühlkanals (111) gekoppelt ist,
der Kopplungsanschluss (112) ein vorstehendes Teil (112a) umfasst, über das ein Eingriffsteil (S) des zweiten Rohrs (121b) in Eingriff steht, und
das zweite Rohr (121b) durch den Eingriff des Eingriffsteils (S) und des vorstehenden Teils (112a) an dem Kopplungsanschluss (112) befestigt ist.

5. Kühlvorrichtung nach Anspruch 4, wobei das zweite Rohr (121b) von dem Kopplungsanschluss (112) getrennt wird, wenn das Eingriffsteil (S) von dem vorstehenden Teil (112a) abgehoben wird.

6. Kühlvorrichtung (100) nach Anspruch 1, wobei der Verbinder (121, 122) ein Kunststoffmaterial umfasst und als ein einziges Teil hergestellt ist.

7. Kühlvorrichtung (100) nach Anspruch 1, wobei der Unteranschluss (122) umfasst:
• ein rohrförmiges Einspritzteil (122a); und
• ein rohrförmiges Verbindungsteil (122b), das mit einem Seitenteil des Einspritzteils (122a) gekoppelt ist.

8. Kühlvorrichtung (100) nach Anspruch 7, wobei der Unteranschluss (122) ferner ein Eingriffsteil (S) umfasst, das von dem Einspritzteil (122a) in einer Schnappverbindungsstruktur vorsteht, so dass das Einspritzteil (122a) mit dem Kühlkörper (110) gekoppelt ist.

9. Batteriepack (1000), das eine Kühlvorrichtung (100) nach Anspruch 1 umfasst und eine Vielzahl von Zellenstapelanordnungen aufnimmt, wobei das Batteriepack umfasst:
• eine Vielzahl von Zellenstapelanordnungen, die auf einem oberen Teil des Kühlkörpers (110) der Kühlvorrichtung (100) gelagert sind;
• wobei die Rohranordnung (120) mit mindestens einem von einem vorderen Ende und einem hinteren Ende des Kühlkörpers (110) gekoppelt ist; und
• eine Seitenwand, die entlang eines Umfangs des Kühlkörpers (110) gekoppelt ist, um ein Seitenteil der Zellenstapelanordnung zu stützen.

## Revendications

1. Dispositif de refroidissement (100) pour refroidir un assemblage d'empilement de cellules à l'intérieur d'un bloc-batterie (1000) à l'aide d'un fluide de refroidissement (F) fourni depuis une partie de stockage de réfrigérant, comprenant :
un dissipateur thermique (110) comprenant une pluralité de canaux de refroidissement (111) ; et
un ensemble de tuyaux (120) couplé au dissipateur thermique (110) pour permettre au fluide d'entrer et de sortir du canal de refroidissement (111), dans lequel l'ensemble de tuyaux (120) comprend :
• une pluralité de raccords (121, 122) couplés à chacun des canaux de refroidissement (111), et formés sous une forme creuse pour permettre au fluide de refroidissement (F) de passer à l'intérieur ; et
• une pluralité de tuyaux de raccordement (123) raccordant perpendiculairement chacun des raccords (121, 122),
dans lequel la pluralité de raccords (121, 122) comprend :
• un connecteur principal (121) raccordé à une partie de stockage de réfrigérant ; et
• une pluralité de connecteurs secondaires (122) raccordés via le connecteur principal (121) et la pluralité de tuyaux de raccordement (123),
dans lequel le connecteur principal (121) comprend :
• un premier tuyau (121a1, 121a2) faisant communiquer la partie de stockage de réfrigérant et la pluralité de tuyaux de raccordement (123) ; et
• un second tuyau (121b) bifurquant à partir du premier tuyau (121a1, 121a2) et se raccordant à un canal de refroidissement (111),
dans lequel le premier tuyau (121a1, 121a2) comprend :
• une partie de tuyau principale (121a1) ayant une extrémité quelconque du premier tuyau qui est fermée ; et
• une partie de tuyau secondaire (121a2) raccordée à une partie latérale de la partie de tuyau principale (121a1),
dans lequel la partie de tuyau secondaire (121a2) est raccordée perpendiculairement à la partie de tuyau principale (121a1),
dans lequel le connecteur principal (121) comprend en outre une partie d'engagement (S) faisant saillie depuis le second tuyau (121b) selon une structure d'encliquetage de sorte que le second tuyau (121b) soit couplé au dissipateur thermique (110).

2. Dispositif de refroidissement (100) selon la revendication 1, dans lequel le second tuyau (121b) est raccordé à une partie de tuyau secondaire (121a2) du premier tuyau (121a1, 121a2).

3. Dispositif de refroidissement (100) selon la revendication 1, dans lequel la partie d'engagement (S) est formée en paires symétriques sur le second tuyau (121b).

4. Dispositif de refroidissement selon la revendication 1, dans lequel
le dissipateur thermique (110) comprend un connecteur de couplage en forme de tuyau (112) qui est couplé à chaque entrée de canal de refroidissement (111),
le connecteur de couplage (112) comprend une partie saillante (112a) sur laquelle s'engage une partie d'engagement (S) du second tuyau (121b), et
le second tuyau (121b) est fixé au connecteur de couplage (112) par l'engagement de la partie d'engagement (S) et de la partie saillante (112a).

5. Dispositif de refroidissement selon la revendication 4, dans lequel le second tuyau (121b) est séparé du connecteur de couplage (112) lorsque la partie d'engagement (S) est soulevée de la partie saillante (112a).

6. Dispositif de refroidissement (100) selon la revendication 1, dans lequel le raccord (121, 122) comprend une matière plastique et est fabriqué d'un seul tenant.

7. Dispositif de refroidissement (100) selon la revendication 1, dans lequel le connecteur secondaire (122) comprend :
• une partie d'injection en forme de tuyau (122a) ; et
• une partie de raccordement en forme de tuyau (122b) couplée à une partie latérale de la partie d'injection (122a).

8. Dispositif de refroidissement (100) selon la revendication 7, dans lequel le connecteur secondaire (122) comprend en outre une partie d'engagement (S) faisant saillie depuis la partie d'injection (122a) selon une structure d'encliquetage de sorte que la partie d'injection (122a) soit couplée au dissipateur thermique (110).

9. Bloc-batterie (1000) comprenant un dispositif de refroidissement (100) selon la revendication 1 et logeant une pluralité d'assemblages d'empilements de cellules, le bloc-batterie comprenant :
• une pluralité d'assemblages d'empilements de cellules disposés sur une partie supérieure du dissipateur thermique (110) du dispositif de refroidissement (100) ;
• l'ensemble de tuyaux (120) étant couplé à au moins l'une d'une extrémité avant et d'une extrémité arrière du dissipateur thermique (110) ; et
• une paroi latérale couplée le long d'un périmètre du dissipateur thermique (110) pour soutenir une partie latérale de l'ensemble empilement de cellules.
